# EUROPÄISCHE PATENTSCHRIFT

(11) **EP 3 016 894 B1**
(45) Veröffentlichungstag und Bekanntmachung des Hinweises auf die Patenterteilung: **01.11.2017**
(21) Anmeldenummer: 14736674.4
(22) Anmeldetag: 23.06.2014
(51) Int. Cl.: B65G 47/96

(54) **KIPPSCHALENFÖRDERWAGEN UND KIPPSCHALENSORTIERANLAGE**
TILT-TRAY CONVEYING CARRIAGE AND TILT-TRAY SORTING INSTALLATION
CHARIOT DE TRANSPORT À BENNE BASCULANTE ET INSTALLATION DE TRIAGE À BENNE BASCULANTE

(30) Priorität: 05.07.2013 DE 102013213229
(43) Veröffentlichungstag der Anmeldung: 11.05.2016
(73) Patentinhaber: Siemens Aktiengesellschaft, 80333 München (DE)
(72) Erfinder: BERDELLE-HILGE, Peter, 78464 Konstanz (DE)
(74) Vertreter: Maier, Daniel Oliver
(86) Internationale Anmeldenummer: PCT/EP2014/063122
(87) Internationale Veröffentlichungsnummer: WO 2015/000729

(56) Entgegenhaltungen:
- WO-A1-2010/012755
- DE-B- 1 069 530
- US-A- 3 209 893

## Beschreibung

Die Erfindung betrifft einen Kippschalenförderwagen zur Verwendung in einer Kippschalensortieranlage mit einem Basiswagen, der zum Verfahren in der Kippschalensortieranlage ausgebildet ist, mit einer Tragschale, die um eine Kippachse relativ zum Basiswagen schwenkbar ist, und mit einem Kippantrieb, der ein fest zum Basiswagen angeordnetes Antriebsmittel und ein mit dem Antriebsmittel und der Tragschale wirkverbundenes Zugmittel umfasst.

Die Erfindung betrifft ferner eine Kippschalensortieranlage für Stückgüter mit einer Fahrschiene, mit mehreren Kippschalenförderwagen, die jeweils zum Verfahren entlang der Fahrschiene ausgestaltet sind, und mit einem Kippschalenförderwagenantrieb, durch den ein oder mehrere Kippschalenförderwagen entlang der Fahrschiene bewegbar sind.

Zum Transport und Vereinzeln von Stückgut haben sich seit langem Kippschalensortieranlagen, die auch Kippschalensorter genannt werden, bewährt. Das zu fördernde Stückgut, beispielsweise Pakete oder Gepäckstücke, wird dabei von den spurgeführten Wagen aufgenommen, die an ihrer Oberseite als Tragschalen ausgebildete Ladungsträger aufweisen, die zum Transport der Stückgüter waagerecht gehalten und zum Abwurf der Stückgüter beidseitig der Fahrstrecke kippbar sind.

Aus der gattungsgemäßen WO 2010/012755 A1 ist beispielsweise ein solcher Kippschalen-Sortierförderer der oben genannten Art bekannt. Um Längenunterschiede des Zugmittels beim Kippen der Tragschale auszugleichen, werden gefederte Umlenk- oder Spannrollen eingesetzt. Allerdings kann es insbesondere bei schweren Stückgütern, die auf der Tragschale gefördert werden, zu Nachteilen durch die elastischen Elemente im Kippantrieb kommen.

Andere Kippschalenförderer sind beispielsweise aus der DE 35 11 936 A1, US 6,712,194 B1 oder US 6,874,614 B2 bekannt.

Daher ist es die Aufgabe der vorliegenden Erfindung, den oben genannten Kippschalenförderwagen so zu verbessern, dass er für das Fördern schwerer Stückgüter besser geeignet ist.

Der Kippschalenförderwagen der oben genannten Art löst diese Aufgabe erfindungsgemäß durch die Merkmale nach Anspruch 1. Für die Kippschalensortieranlage wird die Aufgabe durch den Einsatz der erfindungsgemäßen Kippschalenförderwagen gelöst.

Die erfindungsgemäße Lösung hat den Vorteil, dass ein kinematisch bedingter Längenunterschied des Zugmittels zwischen den unterschiedlichen Positionen der Tragschale durch die Zugmittelführung eingestellt werden kann. Dadurch kann z.B. auf elastische Elemente im Kippantrieb verzichtet werden.

Die Zugmittelführung kann beispielsweise bauchig, nach außen gewölbt oder konvex ausgeformt sein.

Unter einer Tragschale im Sinne der Erfindung ist auch eine randlose Plattform zu verstehen, wie sie beispielsweise in den oben genannten Druckschriften aus dem Stand der Technik offenbart ist. Daher ist der Begriff "Kippschalenförderwagen" als Förderwagen, der Begriff "Kippschalensortieranlage" als Sortieranlage und der Begriff "Tragschale" als Tragvorrichtung zu interpretieren. Ferner ist der Begriff "drehfest" bei der Verbindung zwischen der Tragschale und der Zugmittelführung nicht nur so zu verstehen, dass diese starr miteinander verbunden sind. Es ist vielmehr unter dem Begriff "drehfest" auch zu verstehen, dass eine Drehung der Zugmittelführung zumindest mittelbar auch eine Drehung der Tragschale auslöst. Beispielsweise kann ein Mitnehmer zwischen der Tragschale und der Zugmittelführung ein gewisses Spiel oder eine Dämpfung oder Federung aufweisen, die weiterhin unter eine drehfeste Verbindung im Sinne der Erfindung fallen. Weiterhin ist unter dem Begriff "auslenkt" oder "ausgelenkt" keine durch eine Bewegung ausgelöste Positionsänderung oder Vergrößerung des Abstands zur Drehachse zu verstehen, sondern die Führung des Zugmittels durch die Zugmittelführung nach außen gewölbt von der Kippachse weg.

Die Erfindung kann durch verschiedene voneinander unabhängige vorteilhafte Ausgestaltungen weiterentwickelt werden.

So verläuft die Zugmittelführung in Querrichtung zur Kippachse erfindungsgemäß entlang eines Kreisbogenabschnittes um die Kippachse. Dies hat den Vorteil, dass kein kinematisch bedingter Längenunterschied des Zugmittels zwischen den unterschiedlichen Positionen der Tragschale entsteht. Dadurch wird ein entsprechend steifer Antriebsstrang des Kippantriebs bereitgestellt.

Um den benötigten Bauraum und das Massenträgheitsmoment der Tragschale zu reduzieren, kann die Zugmittelführung zwei Führungsabschnitte aufweisen, zwischen denen die Zugmittelführung entlang des Kreisbogens jeweils ausgespart ist. Hierzu sind Aussparungen ausgebildet.

Eine kostengünstige Ausgestaltung lässt sich dadurch erreichen, dass das Zugmittel reibschlüssig mit der Zugmittelführung verbunden ist und die Zugmittelführung umschließt. Dadurch ist eine Schraubenbefestigung oder ähnliches des Zugmittels an der Zugmittelführung überflüssig.

Die Kippachse des Kippschalenförderwagens ist ortsfest ausgebildet. Alternativ kann die Kippachse auch beweglich als eine Momentenpolachse ausgestaltet sein.

Im Folgenden wird die Erfindung mit Bezug auf die beigefügten Zeichnungen erläutert:
Es zeigen:
   - Figur 1: eine schematische Darstellung einer Kippschalensortieranlage in einer Seitenansicht;
   - Figur 2: die Kippschalensortieranlage aus Figur 1 in einer ersten Kippstellung;
   - Figur 3: die Kippschalensortieranlage aus Figur 1 in einer zweiten Kippstellung;
   - Figur 4: eine schematische 3D-Darstellung der Ausführungsform aus Figur 1.

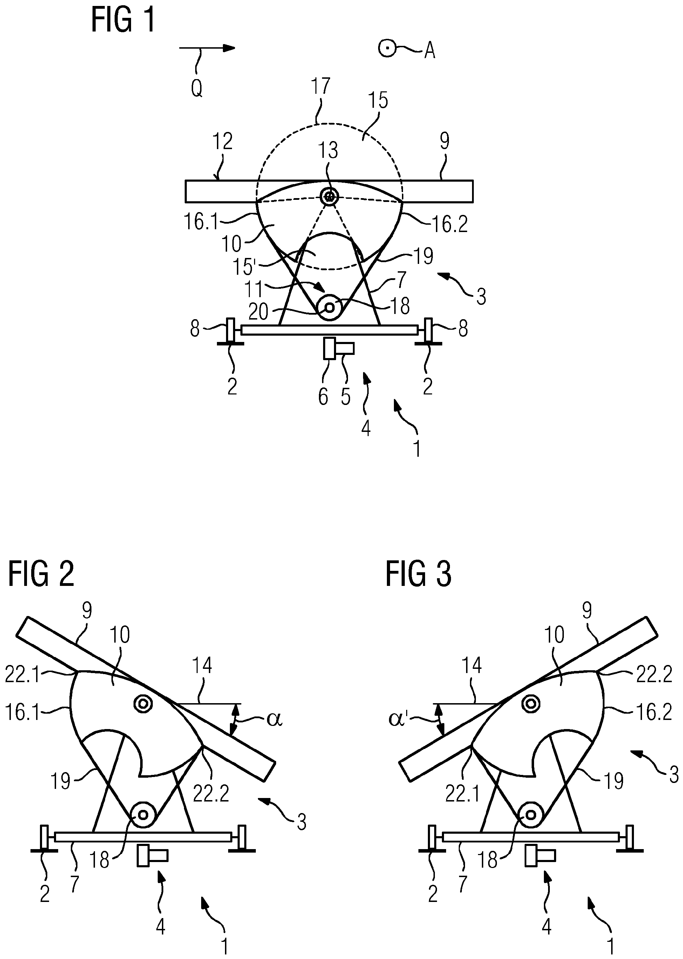

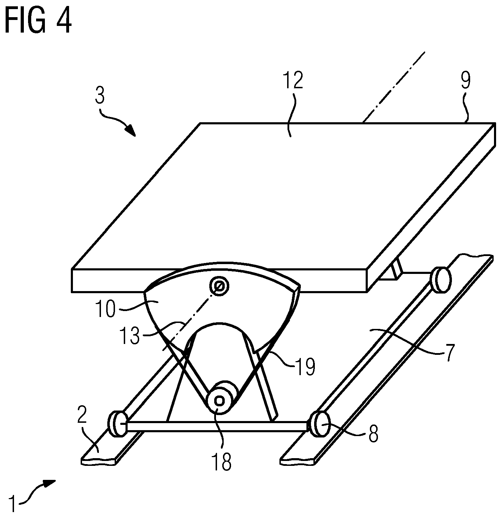

Zunächst wird die Erfindung anhand der beispielhaften Ausführungsform der Figuren 1 bis 4 erläutert.

Die erfindungsgemäße Kippschalensortieranlage 1 weist eine Fahrschiene 2, mehrere Kippschalenförderwagen 3 und einen Kippschalenförderwagen-Antrieb 4 auf.

Die Fahrstrecke 2 ist bei der beispielhaften Ausführungsform der Figuren als eine Doppelschiene ausgebildet, auf der die Kippschalenförderwagen 3 verfahren. Alternativ kann die Fahrstrecke 2 auch als eine Monorail oder ähnliches ausgebildet sein. Die Fahrstrecke 2 kann eine Energieübertragungseinrichtung (nicht dargestellt) aufweisen, die elektrische Energie auf die Kippschalenförderwagen 3 überträgt. Die Fahrstrecke 2 verläuft in bekannter Weise beispielsweise als Endlosfahrstrecke mit Ein- und Ausgabeeinrichtungen, an denen Stückgüter (nicht dargestellt) in bekannter Weise an die Kippschalenförderwagen übergeben und von ihnen durch ihre Kippbewegung abgegeben werden. Die Fahrstrecke ist im Wesentlichen ortsfest angeordnet.

Der Kippschalenförderwagenantrieb 4 ist in Figur 1 ebenfalls ortsfest angeordnet und zum Antreiben der Kippschalenförderwagen 3 auf der Fahrstrecke 2 ausgebildet. Der Kippschalenförderwagenantrieb 4 ist bei der beispielhaften Ausführungsform der Figur 1 sehr einfach dargestellt als ein Elektromotor 5 mit einem Reibrad 6. Der Elektromotor 5 wandelt elektrische Energie in eine Drehbewegung um, die beispielsweise über ein Getriebe (nicht dargestellt) an das Reibrad 6 übertragen wird. Das Reibrad 6 treibt die Kippschalenförderwagen 3 an. Selbstverständlich sind andere Kippschalenförderwagenantriebe 4 möglich, wie sie im Stand der Technik bekannt sind, wie beispielsweise auch ein Kettenantrieb oder ähnliches. Ebenfalls alternativ kann der Kippschalenförderwagenantrieb 4 Teil jedes Kippschalenförderwagens 3 sein und diesen autonom antreiben.

Der Kippschalenförderwagen 3 umfasst einen Basiswagen 7, Räder 8, eine Tragschale 9, eine Zugmittelführung 10 und einen Kippantrieb 11.

Der Basiswagen 7 weist die vier Räder 8 auf, mit denen der Kippschalenförderwagen 3 auf der Fahrstrecke 2 steht.

Die Tragschale 9 weist eine im Wesentlichen rechteckige Tragfläche 12 auf, auf der das Stückgut beim Transport anordenbar ist. Die Tragschale 9 ist drehbar um eine Kippachse 13, die in die Zeichnungsebene hinein verläuft, mit dem Basiswagen 7 verbunden. Bei der Ausführungsform in Figur 1 ist die Kippachse 13 in Querrichtung Q mittig zwischen den dargestellten Rädern 8 und mittig vom Basiswagen 7 angeordnet. Figur 1 zeigt die Tragschale 9 in einer Transportstellung, in der die Tragfläche 12 der Tragschale 9 im Wesentlichen waagerecht, parallel zur Fahrstrecke 2 ausgerichtet ist. Figur 2 zeigt den Kippschalenförderwagen 3 in einer ersten Kippstellung, in der die Tragschale 9 und deren Tragfläche 12 um einen Neigungswinkel α von 30° zur Horizontalen 14 geneigt ist. Figur 3 zeigt den Kippschalenförderwagen 3 in einer zweiten Kippstellung, in der die Tragschale 9 mit der Tragfläche 12 um einen Neigungswinkel α' von -30° zur Horizontalen 14 geneigt ist. Bei den beispielhaften Ausführungsformen in den Figuren 1-5 ist die Kippachse 13 ortsfest ausgebildet.

Die Zugmittelführung 10 ist drehfest mit der Tragschale 9 verbunden. Wie die Tragschale 9 ist auch die Zugmittelführung 10 zum Basiswagen 7 drehbar um die Kippachse 13 angeordnet. Die Zugmittelführung 10 ist als eine Scheibe, also als ein sehr dünner Kreiszylinder, mit der Drehachse 13 als Mittelpunkt ausgebildet, bei der Teile 15, 15' ausgespart sind. Die Zugmittelführung 10 ist folglich als ein Sektor einer Scheibe ausgebildet. Die Zugmittelführung 10 weist zwei Führungsabschnitte 16 auf, die jeweils etwa um 60° auf den Kreisbogen um die Kippachse 13 verlaufen. Zwischen den Führungsabschnitten 16 ist der Kreisbogen 17 auf der einen Seite durch die Aussparung 15 um etwa 180° und auf der anderen Seite durch die Aussparung 15' um etwa 60° ausgespart.

Der Kippantrieb 11 umfasst ein Antriebsmittel 18 und ein Zugmittel 19, das das Antriebsmittel 18 und die Zugmittelführung 10 umschließt. Das Antriebsmittel 18 ist bei der Ausführungsform in Figur 1 als Elektromotor mir einem Getriebe und einer Antriebsrolle ausgebildet. Das Antriebsmittel 18 ist am Basiswagen 7 angeordnet, wobei die Antriebsrolle relativ zum Basiswagen 7 um eine Antriebsachse 20 drehbar ist. Das Zugmittel 19 ist bei der Ausführungsform in Figur 1 als ein Flachriemen ausgebildet. Das Zugmittel 19 umschließt die Zugmittelführung 10 an ihrem Umfang reibschlüssig.

Mit Hilfe des Kippantriebs 11 kann der Kippschalenförderwagen 3 zwischen der Transportstellung in Figur 1, der ersten Kippstellung in Figur 2 und der zweiten Kippstellung in Figur 3 hin und her bewegt werden. Hierzu treibt das Antriebsmittel 18 das Zugmittel 19 an, so dass die Zugmittelführung 10 und die Tragschale 9 angetrieben und geschwenkt werden. In der ersten Kippstellung in Figur 2 liegt das Zugmittel 19 am linken Führungsabschnitt 16.1 an der Zugmittelführung 10 an. So wird das Zugmittel 19 gegenüber einer geraden Verbindung zwischen dem Antriebsmittel 18 und einem ersten Angriffspunkt 22.1 von der Kippachse 13 weg ausgelenkt. Am gegenüberliegenden Führungsabschnitt 16.2 ist das Zugmittel 19 in der Stellung in Figur 2 dagegen nicht ausgelenkt, sondern verläuft gerade zwischen Antriebsmittel 18 und einem zweiten Angriffspunkt 22.2.

In der zweiten Kippstellung in Figur 3 dagegen liegt das Zugmittel 19 an dem rechten Führungsabschnitt 16.2 an und wird entsprechend von der Zugmittelführung in die andere Richtung ausgelenkt.

Um eine Störkontur mit dem zu transportierenden Stückgut zu vermeiden und um die Masse der Zugmittelführung 10 und deren Trägheitsmoment zu reduzieren, ist der Teil 15 nach oben ausgespart. Um die Masse der Zugmittelführung 10 weiter zu reduzieren, ist auch unten zwischen den Führungsabschnitten 16 der Teil 15' ausgespart.

## Patentansprüche

1. Kippschalenförderwagen (3) zur Verwendung in einer Kippschalensortieranlage (1)
mit einem Basiswagen (7), der zum Verfahren in der Kippschalensortieranlage (1) ausgebildet ist,
mit einer Tragschale (9), die um eine Kippachse (13) relativ zum Basiswagen (7) schwenkbar ist,
und mit einem Kippantrieb (11), der ein am Basiswagen (7) angeordnetes Antriebsmittel (18) und ein mit dem Antriebsmittel (18) und der Tragschale (9) wirkverbundenes Zugmittel (19) umfasst, wobei der Kippschalenförderwagen (3) eine an der Tragschale (9) drehfest angeordnete Zugmittelführung (10) umfasst, an der das Zugmittel (19) zumindest abschnittsweise anliegt, **dadurch gekennzeichnet, dass** die Zugmittelführung (10) das Zugmittel (19) von der Kippachse (13) weg auslenkt, wobei die Zugmittelführung (10) in Querrichtung (Q) zur Kippachse (13) entlang eines Kreisbogens um die Kippachse (13) verläuft.

2. Kippschalenförderwagen (3) nach Anspruch 1, **dadurch gekennzeichnet, dass** die Zugmittelführung (10) zwei Führungsabschnitte (16.1, 16.2) aufweist, zwischen denen die Zugmittelführung (10) jeweils eine Aussparung (15.1, 15.2) aufweist.

3. Kippschalenförderwagen (3) nach einem der oben genannten Ansprüche, **dadurch gekennzeichnet, dass** das Zugmittel (19) reibschlüssig mit der Zugmittelführung (10) verbunden ist und die Zugmittelführung (10) umschließt.

4. Kippschalensortieranlage (1) für Stückgüter mit einer Fahrstrecke (2),
mit mehreren Kippschalenförderwagen (3), die jeweils zum Verfahren entlang der Fahrschiene (2) ausgestaltet sind, und mit einem Kippschalenförderwagen-Antrieb (4), durch den ein oder mehrere Kippschalenförderwagen (3) entlang der Fahrschiene (2) bewegbar sind,
**dadurch gekennzeichnet, dass**
die Kippschalenförderwagen (3) nach einem der oben genannten Ansprüche ausgebildet sind.

## Claims

1. Tilt tray conveying carriage (3) for use in a tilt tray sorting installation (1),
comprising a basic carriage (7), which is designed for displacement in the tilt tray sorting installation (1),
a carrying tray (9), which can be pivoted about a tilting axis (13) relative to the basic carriage (7),
and a tilting drive (11), which has a drive means (18), which is arranged on the basic carriage (7), and a traction means (19), which is operatively connected to the drive means (18) and the carrying tray (9),
wherein the tilt tray conveying carriage (3) comprises a traction means guide (10) which is arranged in a rotatably fixed manner on the carrying tray (9), against which guide the traction means (19) butts, at least in part, **characterised in that** the traction means guide (10) deflects the traction means (19) away from the tilting axis (13), wherein the traction means guide (10) runs along an arc around the tilting axis (13) in the transverse direction (Q) to the tilting axis (13).

2. Tilt tray conveying carriage (3) according to claim 1, **characterised in that** the traction means guide (10) has two guide sections (16.1, 16.2) between which the traction means guide (10) has one recess (15.1, 15.2) in each case.

3. Tilt tray conveying carriage (3) according to one of the preceding claims, **characterised in that** the traction means (19) is frictionally connected to the traction means guide (10) and surrounds the traction means guide (10).

4. Tilt tray sorting installation (1) for articles, comprising a track system (2),
a plurality of tilt tray conveying carriages (3) which are each designed for displacement along the rail (2),
and comprising a tilt tray conveying carriage drive (4) by which one or more tilt tray conveying carriage(s) (3) can be moved along the rail (2),
**characterised in that**
the tilt tray conveying carriages (3) are designed according to one of the preceding claims.

## Revendications

1. Convoyeur (3) à plateau basculant destiné à être utilisé dans une installation de triage (1) à plateaux basculants, comprenant
un chariot de base (7) qui est configuré en vue de se déplacer dans l'installation de triage (1) à plateaux basculants ;
un plateau porteur (9) qui peut pivoter autour d'un axe de basculement (13) par rapport au chariot de base (7), et
un entraînement basculant (11) qui comprend un moyen d'entraînement (18) disposé sur le chariot de base (7) et un moyen de traction (19) relié fonctionnellement au moyen d'entraînement (18) et au plateau porteur (9), étant entendu que le convoyeur (3) à plateau basculant comprend un dispositif de guidage (10) de moyen de traction monté asservi en rotation sur le plateau porteur (9) sur lequel le moyen de traction (19) repose au moins par un segment, **caractérisé en ce que** le dispositif de guidage (10) de moyen de traction dévie le moyen de traction (19) en l'écartant de l'axe de basculement (13), le dispositif de guidage (10) de moyen de traction se déplaçant dans la direction transversale (Q) vers l'axe de basculement (13) en suivant un arc de cercle autour de l'axe de basculement (13).

2. Convoyeur (3) à plateau basculant selon la revendication 1, **caractérisé en ce que** le dispositif de guidage (10) de moyen de traction comprend deux segments de guidage (16.1, 16.2) entre lesquels le dispositif de guidage (10) de moyen de traction présente un évidement (15.1, 15.2) respectif.

3. Convoyeur (3) à plateau basculant selon l'une quelconque des revendications précédentes, **caractérisé en ce que** le moyen de traction (19) est relié par friction au dispositif de guidage (10) de moyen de traction et enveloppe le dispositif de guidage (10) de moyen de traction.

4. Installation de triage (1) à plateaux basculants pour articles de détail comportant
une piste de roulement (2) ;
plusieurs convoyeurs (3) à plateau basculant qui sont chacun configurés en vue de se déplacer le long du rail (2), et
un entraînement (4) de convoyeurs à plateau basculant au moyen duquel un ou plusieurs convoyeurs (3) à plateau basculant peuvent être déplacés le long du rail (2), **caractérisée en ce que**
les convoyeurs (3) à plateau basculant sont configurés selon l'une quelconque des revendications précédentes.
